(19) Europäisches Patentamt European Patent Office Office européen des brevets

(11) **EP 4 372 458 A1**

(12) **EUROPEAN PATENT APPLICATION**

(43) Date of publication:
**22.05.2024   Bulletin 2024/21**

(21) Application number: **22208009.5**

(22) Date of filing: **17.11.2022**

(51) International Patent Classification (IPC):
**G02F 1/03** (2006.01)     **G02B 6/12** (2006.01)
**G02F 1/225** (2006.01)     **H01S 5/02** (2006.01)

(52) Cooperative Patent Classification (CPC):
**G02F 1/225; G02F 1/03**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Imec VZW
3001 Leuven (BE)**
• **Universiteit Gent
9000 Gent (BE)**

(72) Inventors:
• **DIEUSSAERT, Emiel
9000 Gent (BE)**
• **LI, YanLu
3010 Kessel-Lo (BE)**
• **BAETS, Roeland
9800 Deinze (BE)**

(74) Representative: **AWA Sweden AB
Box 5117
200 71 Malmö (SE)**

(54) **PHOTONIC INTEGRATED CIRCUIT FOR MULTIPLE FREQUENCY SHIFTING OF LIGHT**

(57)     According to an aspect of the present inventive concept there is provided a photonic integrated circuit, PIC, comprising a waveguide array. Each waveguide is configured to guide a light signal. All guided light signals originate from a common light beam or multiple mutually coherent light beams.

Each waveguide is associated with a mutually unique modulator, providing modulation, by a modulation signal, of phase and/or amplitude of the light signal, forming a modulated light signal. The modulation signals of all modulators have a common modulation period, such that the modulated light signal comprises a plurality of sideband frequencies representing different orders of frequency shifts based on harmonics of the modulation period.

A free propagation unit comprising inputs associated with the waveguides receives the modulated light signals. The modulated light signals propagate freely in two spatial dimensions through the free propagation unit and interfere to form output signals. Different outputs of the free propagation unit receive light with different peak frequency corresponding to different sideband frequencies.

Fig. 1

**Description**

Technical field

The present inventive concept relates to the field of on-chip interferometric sensing, and more specifically to a photonic integrated circuit, a system, and a method for multiple frequency shifting of light.

Background

In the past decade, photonic integrated circuits, PICs, have proven to have many applications in the field of interferometry to retrieve phase information of the light on the chip. Phase information can provide information about for example the optical path length the light has travelled and can thus be used for distance measurements, utilized in e.g. Laser Doppler Vibrometry (LDV), velocimetry, and other remote sensing applications.

In homodyne interferometric systems the frequency of the signal carrier and the local oscillator are the same. Combining them on a photodetector converts the intensity of the interference to a photocurrent which gives information about the phase of the signal carrier.

In heterodyne interferometric systems there is a frequency shift between the local oscillator and the signal carrier. This causes the photocurrent signal from the detector to have shifted in the electrical frequency domain, allowing for reduction of photodetector noise.

Current methods for on-chip frequency shifting focus on creating a single frequency shifted output, while suppressing the other sidebands. However, in a number of applications, multiple interferometric sensing beams at different frequencies are required. Using multiple different single side band frequency shifters allows for generation of multiple beams with different frequency shifts. However, a challenge with such combinations is that the increasing number of sensing beams results in increased bulky design size, an increased number of pads and an increased complexity of the read-out electronics. Moreover, such combinations are inefficient in terms of creating multiple frequency shifted output beams.

Hence, there is a need in the art for further improvements related to efficiency and downscaling of on-chip multibeam interferometry.

Summary

An objective of the present inventive concept is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect of the present inventive concept there is provided a photonic integrated circuit, PIC, the PIC comprising:

a waveguide array, wherein each waveguide in the waveguide array is configured to guide a light signal, wherein the light signal guided by all of the waveguides originates from a common light beam or multiple mutually coherent light beams;

a modulator array associated with the waveguide array such that each waveguide in the waveguide array is associated with a mutually unique modulator of the modulator array, each modulator being configured to provide a modulation, by generation of a modulation signal, of a phase and/or an amplitude of the light signal being guided in the associated waveguide to form a modulated light signal, wherein the modulation signals of all modulators have a common modulation period, such that the modulated light signal comprises a plurality of sideband frequencies representing different orders of frequency shifts based on harmonics of the common modulation period;

a free propagation unit comprising an array of inputs, each input being associated with a waveguide of the waveguide array and configured to receive the modulated light signal from the associated waveguide, such that the modulated light signals from all waveguides propagate freely in two spatial dimensions through the free propagation unit towards an array of outputs of the free propagation unit, wherein the modulated light signals interfere with each other to form output signals at the array of outputs, such that different outputs receive light with different peak frequency corresponding to different sideband frequencies.

By the term "light signal" is here meant any signal carried by light. Given only as examples, a light signal may be in the form of, but is by no means limited to, a continuous light beam, a light beam with varying intensity, and/or a sequence of light pulses. In this context the term "light" should be allowed a wide interpretation, not limited to visible electromagnetic radiation but may also include for example ultra-violet light and infra-red light. In the present context the "light signal" may be of a single wavelength, and thus a single frequency. It should however be understood that a single wavelength and a single frequency does not necessarily mean a strictly single wavelength or frequency, but rather than the light signal has a narrow line width comprising a narrow wavelength band and/or frequency band substantially forming a single wavelength with a technically reasonable tolerance of a practical narrow band light source. Henceforth, the wavelength and frequency of the light signal will be referred to as the fundamental wavelength and fundamental frequency of the light signal.

By the term "waveguide" is here meant any unit, device and/or element within which light may be guided, and within which transmission is restricted to a single direction, thereby providing transmission with low loss. By way of example, light may be reflected on inner walls of the waveguide by total internal reflection or by means of a reflective coating provided on the walls of the waveguide. Given as non-limiting examples, the waveguide may be a transparent dielectric waveguide or an optical fiber.

By the term "modulator" is here meant any unit, device and/or element which can modulate a beam of light signal being guided in the associated waveguide. The modulation provided by the modulator may be imposed on one or more property of the light signal such as the phase, the frequency, the amplitude, and/or the polarization. The modulator is not limited to a specific type of modulator, but may rather be of a number of different types, such as a PN junction modulator, an electro-absorption modulator, an acousto-optic modulator, a thermo-optic modulator or the like.

By way of example, the modulation provided by the modulator may be controlled by a control signal. The control signal may be provided by a control unit connected to the modulator array. The control unit may be configured for controlling the generation of the modulation signal in each modulator, by means of the control signal.

Each respective modulation signal may comprise a single frequency or a plurality of frequencies. The frequency content of the modulation signal may be referred to as the power spectral distribution. By way of example, the modulation signal may comprise a single or a plurality of sine waves, or the modulation signal may comprise more complex waveforms such as square waves or sawtooth waves.

The modulation signals of all modulators in the modulator array have a common power spectral distribution. Put differently, the modulation signals of all modulators have the same frequency content. It should be noted however, that the amplitude of the different frequencies in the modulation signal are not necessarily the same for the different modulation signals.

The modulation signal of each modulator is a periodic modulation signal having a modulation period, providing periodic modulation of light in the associated waveguide. The modulation signals of all modulators have a common modulation period.

The modulation of the light signal in the associated waveguide forms a modulated light signal. The modulated light signal comprises a plurality of sideband frequencies representing different orders of frequency shifts based on harmonics of the common modulation period. In other words, the modulated light signal comprises, in addition to the fundamental frequency, a plurality of sideband frequencies being shifted from the fundamental frequency by an integer number of the overall modulation frequency corresponding to the common modulation period. The sideband frequencies may be shifted to higher and/or lower frequencies with respect to the fundamental frequency. The modulated light signal may comprise one, two, three, four, five, six, or more sideband frequencies, in addition to the fundamental frequency.

Each waveguide is associated with an input of the free propagation unit in order to allow coupling of the modulated light signal from the waveguide into the free propagation unit. Each waveguide may be arranged such that an end of the waveguide coupling the modulated light signal into the input of the free propagation unit may be in physical contact with the free propagation unit, or it may alternatively be physically separated from the free propagation unit so as to form a gap between the waveguide and the free propagation unit.

By the term "free propagation unit" is here meant any unit, device and/or element comprising a light guiding medium allowing light to freely propagate in at least two perpendicular directions. However, it should be understood that the free propagation unit is a physical unit, and therefore has physical dimensions and limitations. As such, the free propagation unit does not allow light to infinitely propagate in the at least two perpendicular directions, but rather to freely propagate within the free propagation unit and being restricted by outer boundaries or walls of the free propagation unit.

The free propagation unit is configured to propagate the modulated light signals coupled into the free propagation unit from the waveguide array such that the modulated light signals interfere with each other in the free propagation unit to form output signals at the array of outputs of the free propagation unit. By the present arrangement different outputs receive light with different peak frequency corresponding to different sideband frequencies. Thus, in the manner described above, efficient separation of the different sideband frequencies into respective outputs may be provided without blocking light at other sideband frequencies.

Given as non-limiting examples, the free propagation unit may be a slab region, a star coupler, a lens system comprising one or more lenses, a plurality of combined slab regimes, a multi-mode interferometer (MMI), a grating configured to collect light from different directions into different outputs, or an on-chip Fourier imaging structure.

An advantage of the PIC is that a more efficient on-chip heterodyning frequency shifting may be provided. Conventional on-chip heterodyning techniques typically utilizes one frequency shifted output while suppressing the other sidebands. In the present PIC, however, other side bands are not suppressed, but rather the power of the sidebands in different waveguides are collected to interfere, and thereby creating multiple different frequency shifted outputs. Thus, a power efficient on-chip heterodyning frequency shifting may be provided since the power of the sidebands is not lost, while providing a good side band separation at the outputs.

Further, the present arrangement facilitates for on-chip multi-beam heterodyning interferometers with a single light source, a single detector and simplified read-out electronics to be made.

Another advantage is that frequency shifting allowing for generation of multiple sideband frequencies may be provided on chip at a reduced size. The present arrangement may reduce the size of the device with which multiple frequencies may be generated from a single light frequency. Further, the present arrangement may allow for reduction of the number of bonding pads required. It may also allow for simplification of electronics. This, in turn, may further reduce the size as well as the complexity of the system.

Yet another advantage is that on-chip frequency shifting may be provided at a reduced cost. Since the number of light sources may be reduced, and potentially reduced to a single light source, the cost for such systems may thus be reduced. Also, the need for additional optical elements may be reduced, which may further reduce the cost. Costs may be further reduced also due to reduced number of bonding pads, reduced complexity of electronics and reduced design size in general.

According to an embodiment, the PIC further comprises an output waveguide array, wherein each output waveguide of the output waveguide array is associated with an output of the free propagation unit and configured to receive and guide a respective output signal of the output signals.

The output waveguides of the output waveguide array may guide the respective output signals towards a position at which the output signals may be used. By way of example, in a heterodyne interferometry system, the output waveguides may be configured to guide the respective output signals towards for instance a target to be tested.

As an alternative to the output waveguides, it is conceivable that the PIC may instead comprise for example an array of lenses, prisms or mirrors configured to receive and to guide the output signal. Further, instead of guiding the output signals, it is conceivable that photodetectors are arranged at the outputs of the free propagating unit. By way of examples, a plurality of photodiodes or an imaging detector may be arranged at the output array. By arranging detectors at the outputs of the free propagating unit, information about for example the frequency content of an electrical signal, as for example a control signal, received at the respective modulators or the modulator response to the electrical signal may be determined.

According to an embodiment, the PIC further comprises a splitter configured to receive the common light beam, to split the common light beam so as to form a plurality of light signals, and to guide each of the light signals towards a mutually unique waveguide of the waveguide array.

In case for instance a common light beam from a single light source is to be used, the common light beam may be split up into the waveguides by the splitter. It should be understood that the splitter may form part of the PIC or it may alternatively be a separate element. Given as non-limiting examples, the splitter may be a star coupler, a multi-mode interferometer (MMI) splitter, or a combination of splitters.

An advantage with this embodiment is that the splitter allows for a single common light beam to be used for the PIC.

Another advantage is that if the splitter is integrated on the PIC, the combination of the splitter and the frequency shifting elements may be provided at a further reduced and thus more compact size.

According to an embodiment, the splitter is further configured to split an intensity of the common light beam equally into the respective light signals.

According to an embodiment, the splitter is further configured to split an intensity of the common light beam into the respective light signals such that intensities of the respective output signals are equal.

According to an embodiment, the PIC is further configured to provide a delay between modulations of consecutive modulators in the modulator array.

The term "delay" is here referring to the time at which modulation occurs at the respective inputs of the free propagation unit. By way of example, the delay between two consecutive modulators may be in the order of 1 ps to 1 ms. By way of further example, in LDV applications the delay between two consecutive modulators may be in the order of 10 ns to 1 $\mu$s. In this manner, a frequency shift in the order of 1 MHz to 100 MHz may be provided for LDV applications.

Delayed modulation may be provided by delaying the start of modulation in consecutive modulators with respect to each other. However, delayed modulation may also be provided, for example, by providing different optical delay lines for different waveguides such that different waveguides have different optical path lengths, thereby providing phase difference between the different waveguides at the inputs to the free propagation unit. It should be understood that the delay between two consecutive modulators may be within one period of the signal, as for example in the order of 1 fs to 1 ps. However, as mentioned above the delay between two consecutive modulators may be in the order of 1 ps to 1 ms, thereby providing a delay being much longer than the period of the signal.

According to an embodiment, the delay between modulations of consecutive modulators is equal for all consecutive modulators in the modulator array.

If a spacing between consecutive inputs is equal for all consecutive inputs in the array of inputs, equal delay between consecutive modulators may be required.

According to an embodiment, the free propagation unit is in the form of a slab region.

By the term "slab region" is here meant any unit, device and/or element comprising a light guiding medium having a planar shape such that the light guiding medium extends in two perpendicular directions, whereas the light guiding medium in a third direction, perpendicular to the plane, is restricted to extending only a fraction of the extension in the other two directions, essentially forming a thin plane of the light guiding medium. Light entering the plane may be guided in all directions within a plane.

The slab region is configured to propagate the modulated light signal coupled into the slab region from the waveguide array, from the array of inputs towards the array of outputs of the slab region.

According to an embodiment, the free propagation unit is in the form of a star coupler.

By the term "star coupler" is here meant any optical unit, device and/or element having multiple inputs and outputs. A star coupler is commonly used for splitting each optical input signal and distributing it to the outputs.

According to a second aspect of the present inventive concept there is provided a system for multiple interferometric sensing, the system comprising:

a PIC according to the first aspect;
a control unit connected to the modulator array and configured for controlling the generation of the modulation signal in each modulator.

The control unit may be configured to provide periodic control signals to the modulators, based on which the modulation signals are generated. The control unit may optionally be configured to provide adjustable delays between the different control signals in order to provide delayed modulation between consecutive waveguides. As an alternative to the control unit being configured to provide adjustable delays, the waveguides of the PIC may be designed with appropriate delay lines, providing fixed delays between consecutive waveguides.

According to an embodiment, the system further comprises:

at least one light source configured and arranged to provide a reference light beam and the common light beam or the multiple mutually coherent light beams for the PIC;
at least one photodetector comprising a light sensitive element configured to generate an electrical signal dependent on an intensity of light incident onto the light sensitive element, the at least one photodetector being configured to receive the reference light beam and the output signals from the PIC being scattered by a target, incident onto the light sensitive element.

By the term "light source" is here meant any unit, device and/or element at which light is generated. By way of example, the light source may be, but is not limited to a laser, a laser diode, a light emitting diode, an incandescent light source, a fluorescent light source, or a combination thereof.

According to an embodiment, the light source is further configured to generate at least partially coherent light.

By the term "light sensitive element" is here meant an element reacting to light impinging onto the element, by generating an electrical signal as a response to the light intensity. The light sensitive element may be arranged as a single light sensitive element on a photodetector, or alternatively as an array of light sensitive elements, configured to allow read-out of the electrical signals representing light for image acquisition. Given as non-limiting examples, light sensitive elements may be found on photodiodes, photomultiplier tubes (PMT), and pixels on image detectors such as charge-coupled devices (CCD) and complementary metal oxide semiconductors (CMOS).

The system for multiple interferometric sensing may be a system configured to retrieve phase information of the light, for example for on-chip interferometry. By way of example, phase information of light may provide information about the optical path length that the light has travelled. The information may be used for measuring for instance distance and/or velocity. Given as a non-limiting example, the system may be a Laser Doppler Vibrometer (LDV) system.

In the system for multiple interferometric sensing the PIC may generate a plurality of sideband frequencies representing different orders of frequency shifts based on harmonics of the common modulation period, with respect to the fundamental frequency. The PIC may further provide a plurality of output signals at the outputs of the array of outputs, such that each output receives an output signal comprising a different peak frequency corresponding to a different sideband frequency, than the other outputs.

The output signals may be guided towards a target, after which the signal from the target may be directed towards the one or more photodetectors. The reference light beam being frequency shifted with respect to the output signals is also directed towards the one or more photodetector. When the reference light beam is combined with a frequency shifted output signal on a photodetector, the signal from the photodetector may represent a difference-frequency spectrum. If the different output signals are frequency shifted to different frequencies with respect to the reference light beam and with respect to each other, the reference light beam and the different output signals from the target may be combined onto a single photodetector, allowing multiplexing of different output signals onto the single photodetector, wherein the output signals may subsequently be discerned in the electric spectrum from the photodetector.

An advantage is that a system for multiple interferometric sensing may be provided at a reduced size. The present arrangement may reduce the size of the PIC with which multiple frequencies may be generated from a single light frequency. Further, using a single photodetector for all the output signals enables reducing the number of bonding pads required. It also enables the simplification of readout electronics. This, in turn, may further reduce the size as well as the complexity of the system.

According to an embodiment, the reference light beam is one of the output signals from the PIC.

An advantage with this embodiment is that the need for a separate frequency shifter dedicated for the reference light beam may be eliminated.

According to a third aspect of the present inventive concept there is provided a method for frequency shifting of light in a photonic integrated circuit, PIC, comprising a waveguide array, a modulator array associated with the waveguide array such that each waveguide in the waveguide array is associated with a mutually unique modulator of the modulator array, and a free propagation unit comprising an array of inputs, each input being associated with a waveguide of the waveguide array, the method comprising:

guiding, in each waveguide in the waveguide array, a light signal, wherein the light signal guided by all of the waveguides originates from a common light beam or multiple mutually coherent light beams;

modulating, by generation of a modulation signal in each modulator, a phase and/or an amplitude of the light signal being guided in the associated waveguide to form a modulated light signal, wherein the modulation signals of all modulators have a common modulation period, such that the modulated light signal comprises a plurality of sideband frequencies representing different orders of frequency shifts based on harmonics of the common modulation period;

receiving, at each of the inputs of the free propagation unit, the modulated light signal from the associated waveguide;

freely propagating the modulated light signals from all waveguides in two spatial dimensions through the free propagation unit towards the array of outputs of the free propagation unit, wherein the modulated light signals interfere with each other to form output signals at the array of outputs, such that different outputs receive light with different peak frequency corresponding to different sideband frequencies.

According to an embodiment, the PIC further comprises an output waveguide array, each output waveguide of the output waveguide array being associated with an output of the free propagation unit, the method further comprising: receiving and guiding, by each output waveguide, a respective output signal of the output signals.

According to an embodiment, the method further comprises:

receiving, at a splitter, the common light beam;

splitting, by the splitter, the common light beam so as to form a plurality of light signals; and

guiding each of the light signals towards a mutually unique waveguide of the waveguide array.

According to an embodiment, the method further comprises:

providing a delay between modulations of consecutive modulators in the modulator array.

Effects and features of the second and the third aspects are largely analogous to those described above in connection with the first aspect. Embodiments mentioned in relation to the first aspect are largely compatible with the second and the third aspects. It is further noted that the inventive concepts relate to all possible combinations of features unless explicitly stated otherwise.

Other objectives, features and advantages of the present inventive concept will appear from the following detailed disclosure, from the attached claims as well as from the drawings.

Brief descriptions of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.

Fig. 1 schematically illustrates a photonic integrated circuit, PIC, configured for frequency shifting of light passing therethrough.

Fig. 2A schematically illustrates a photonic integrated circuit, PIC, configured for frequency shifting of light passing therethrough, and comprising a splitter and output waveguides.

Fig. 2B illustrates the modulation signals modulating light signals in the waveguides when delayed modulation is applied.

Fig. 3A schematically illustrates a system for multiple interferometric sensing, comprising a separate frequency shifter for the reference light beam.

Fig. 3B schematically illustrates a system for multiple interferometric sensing, using an output signal from the PIC as the reference light beam.

Fig. 4 illustrates a schematic block diagram shortly summarizing the method for frequency shifting of light in a photonic integrated circuit, PIC.

Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

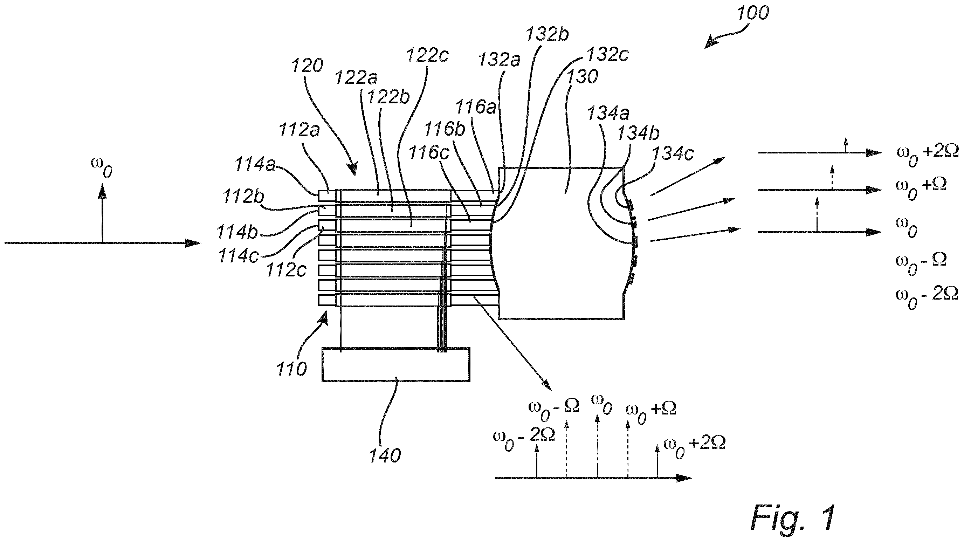

Fig. 1 schematically illustrates a photonic integrated circuit 100, PIC. The PIC 100 is configured for frequency shifting of light passing therethrough.

The PIC 100 comprises a waveguide array 110 comprising waveguides 112a, 112b, 112c. Each waveguide 112a, 112b, 112c comprises a receiving end 114a, 114b, 114c configured to receive a light signal. A light signal may be provided to each receiving end 114a, 114b, 114c. The light signals provided to the respective waveguides 112a, 112b, 112c originate from either a common light beam or multiple mutually coherent light beams. Such light signals may be provided by for example a single light source, such as a single laser, generating a common light beam which is split into several light signals which may subsequently be provided to the receiving ends 114a, 114b, 114c of the waveguides 112a, 112b, 112c. Alternatively, such light signals may be provided by for example a plurality of lasers being interconnected to a common control source, ensuing that the plurality of lasers generate multiple mutually coherent light beams. Thus, the light signal provided to each waveguide 112a, 112b, 112c has a common frequency $\omega_0$, here referred to as the fundamental frequency $\omega_0$ of the light.

Each waveguide 112a, 112b, 112c in the waveguide array 110 is further configured to guide the light signal from the receiving end 114a, 114b, 114c, through the waveguide 112a, 112b, 112c, towards a transmitting end 116a, 116b, 116c.

The PIC 100 further comprises a modulator array 120 comprising modulators 122a, 122b, 122c. The modulator array 120 is associated with the waveguide array 110 such that each waveguide 112a, 112b, 112c in the waveguide array 110 is associated with a mutually unique modulator 122a, 122b, 122c of the modulator array 120. Each modulator 122a, 122b, 122c is configured to provide a modulation of a phase and/or an amplitude of the light signal being guided in the associated waveguide 112a, 112b, 112c. Modulation of the light signal is provided by generation of a modulation signal in the modulator 122a, 122b, 122c. As a result of the modulation, a modulated light signal is formed, propagating towards the transmitting end 116a, 116b, 116c of the waveguide 112a, 112b, 112c.

Generation of the modulation signals may be provided by a control unit 140 being connected to the modulator array 120. By way of example, the control unit 140 may control the generation of the modulation signals in the respective waveguides 112a, 112b, 112c by means of one or more control signals which may be electrical signals controlling for example the phase, frequency content and/or amplitudes of the respective modulation signals. It should be understood that the control unit 140 does not necessarily form part of the PIC as such, but may alternatively be an external control unit 140. By way of example, the PIC 100 and the control unit 140 may form part of a system for multiple interferometric sensing.

The modulation signals of all modulators are periodic modulations having a common modulation period T. Based on the common modulation period T, a common modulation frequency may be defined as:

$$\Omega = \frac{2\pi}{T}$$

When the modulators 122a, 122b, 122c are driven by the common modulation period T and thus the common modulation frequency $\Omega$, the electric field strength $E_{mod}$ of the modulated light signal may be expressed as the sum:

$$E_{mod} = E_0 \sum_{n=-\infty}^{\infty} A_n \, exp(i(\omega_0 + n\Omega)t)$$

Thus, for each waveguide, the modulated light signal comprises a plurality of sideband frequencies ($\omega_0 + n\Omega$) representing different orders n of frequency shifts $n\Omega$ with respect to the fundamental frequency $\omega_0$, based on harmonics of the common modulation period T, and therefore on $\Omega$. Given as a non-limiting example, the modulate light signal may comprise the sideband frequencies $\omega_0 - 2\Omega$, $\omega_0 - \Omega$, $\omega_0 + \Omega$, and $\omega_0 + 2\Omega$, in addition to the fundamental frequency $\omega_0$, as illustrated in Fig. 1.

As illustrated in Fig. 1, the sideband frequencies are symmetrically distributed around the fundamental frequency $\omega_0$ of the light. However, it should be understood that the PIC is not limited to providing a symmetrical frequency shift around the fundamental frequency $\omega_0$. For example, asymmetrical frequency distribution with respect to the fundamental frequency $\omega_0$ is equally conceivable, such that the output frequencies may be for example $\omega_0$, $\omega_0 + \Omega$, and $\omega_0 + 2\Omega$, $\omega_0 + 3\Omega$, and $\omega_0 + 4\Omega$.

It serves to mention that $A_n$ in the equation expressing the electric field strength above, may be a real number or it may be a complex number having a real part and an imaginary part.

The PIC 100 further comprises a free propagation unit 130. The free propagation unit 130 comprises an array of inputs 132a, 132b, 132c. Each input 132a, 132b, 132c is associated with a mutually unique waveguide 112a, 112b, 112c of the waveguide array 110 and configured to receive the modulated light signal from the associated waveguide 112a, 112b, 112c.

The free propagation unit 130 is configured such that the modulated light signals from all waveguides 112a, 112b, 112c propagate freely in two spatial dimensions through the free propagation unit 130 towards an array of outputs 134a, 134b, 134c of the free propagation unit 130.

In Fig. 1, the free propagation unit 130 is illustrated as a slab region comprising a light guiding medium with a planar shape extending in two perpendicular directions, whereas in the third direction, perpendicular to the plane, the light guiding medium is restricted to extending only a fraction of the extension in the other two directions. In this manner, the slab region is configured to propagate the modulated light signals coupled into the slab region from the waveguide array, within the plane. However, it should be understood that the free propagation unit 130 is not limited to being a slab region, but may alternatively be a star coupler, a lens system comprising one or more lenses, a multi-mode interferometer (MMI), a plurality of combined slab regimes, or the like.

The sideband frequencies as well as the fundamental frequency of the modulated light signals interfere with each other in the free propagation unit 130. Different frequencies from the different inputs 132a, 132b, 132c propagate in different directions and interfere with each other such that when the light reaches the different outputs 134a, 134b, 134c of the free propagation unit 130, the interference of the light is such that the different outputs receive light with different peak frequency corresponding to different sideband frequencies. More specifically, in the example mentioned above with four sideband frequencies in addition to the fundamental frequency, the first output 134a may be reached by light with a peak frequency at $\omega_0 - 2\Omega$, the second output 134b may be reached by light with a frequency at $\omega_0 - \Omega$, the third output 134c may be reached by light with a frequency at $\omega_0$, and so on. Thus, by the present arrangement separation of the different sidebands and fundamental frequency may be provided without blocking out unwanted sidebands at the different outputs. Thereby a more efficient frequency shifting and frequency separation may be provided.

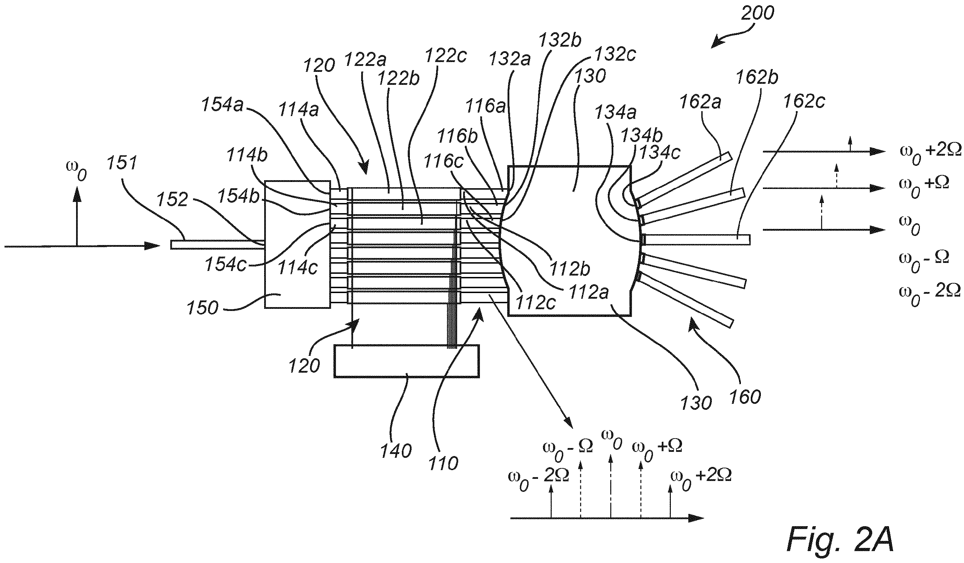

Fig. 2A schematically illustrates a photonic integrated circuit 200, PIC. The PIC 200 is configured for frequency shifting of light passing therethrough. The PIC 200 shares some of the features with PIC 100 described in relation to Fig. 1, the details of which are not repeated here.

The PIC 200 comprises a splitter 150. The splitter 150 comprises a splitter input 152 and an array of splitter outputs 154a, 154b, 154c. The splitter 150 is configured to receive a light beam at the splitter input 152. The light beam may be provided by for example a single light source, such as a single laser, generating the light beam. As illustrated in Fig. 2A, the light beam may be provided through an input waveguide 151 optically connected to the splitter input 152. However, it should be realized that the light beam may be provided to the splitter input 152 in alternative manners, such as for example by an optical fiber, or by direct connection of an output of the light source to the splitter input 152.

The splitter 150 is further configured to split the light beam so as to form a plurality of light signals, and to guide each of the light signals to their respective splitter outputs 154a, 154b, 154c. Since the light beam has a frequency $\omega_0$, all of the light signals have a common frequency $\omega_0$.

The PIC 200 further comprises a waveguide array 110 comprising waveguides 112a, 112b, 112c. Each waveguide 112a, 112b, 112c comprises a receiving end 114a, 114b, 114c configured to receive a light signal. Each receiving end 114a, 114b, 114c is optically connected to a mutually unique splitter output 154a, 154b, 154c, thereby allowing each of the light signals at the splitter outputs 154a, 154b, 154c to be coupled into a mutually unique waveguide 112a, 112b, 112c of the waveguide array 110.

Similar to PIC 100, the PIC 200 further comprises a modulator array 120 associated with the waveguide array 110. Each modulator 122a, 122b, 122c is configured to provide a modulation of the light signal guided in the associated waveguide 112a, 112b, 112c, by generation of a modulation signal. In the same manner as for PIC 100, the modulated light signal in each waveguide 112a, 112b, 112c of PIC 200 comprises a plurality of sideband frequencies ($\omega_0 + n\Omega$) representing different orders n of frequency shifts $n\Omega$ with respect to the fundamental frequency $\omega_0$, based on harmonics of the common modulation period T, and therefore on $\Omega$.

The PIC 200 further comprises a free propagation unit 130 having an array of inputs 132a, 132b, 132c. The modulated light signal of each waveguide 112a, 112b, 112c is coupled into the free propagation unit 130 from the transmitting end 116a, 116b, 116c of the waveguide 112a, 112b, 112c to the respective input 132a, 132b, 132c of the free propagation unit 130. The sideband frequencies as well as the fundamental frequency of the modulated light signals propagate freely and interfere with each other in the free propagation unit 130. Due to the interference of the light the different outputs 134a, 134b, 134c of the free propagating unit 130 receive light with different peak frequency corresponding to different sideband frequencies, thereby providing separation of the different sidebands and fundamental frequency.

The PIC 200 further comprises an output waveguide array 160 comprising output waveguides 162a, 162b, 162c. Each output waveguide 162a, 162b, 162c of the output waveguide array 160 is optically coupled to an output 134a, 134b, 134c of the free propagation unit 130 and configured to receive and guide the output signal. Since the different sidebands are substantially separated to the different outputs 134a, 134b, 134c, each output waveguide 162a, 162b, 162c may receive and guide an output signal corresponding to a respective sideband. Thus, the respective sidebands may be guided individually, and the output waveguides 162a, 162b, 162c may be used to guide the respective sidebands to for example dedicated measurement positions, if the PIC forms part of a measurement system.

It serves to mention that the splitter 150 may be configured to split the light beam such that the intensity of the light beam is distributed equally into the respective light signals being coupled into the waveguides 112a, 112b, 112c. Alternatively or additionally, the splitter 150 may be configured to split the intensity of the light beam into the respective light signals such that intensities of the respective output signals are equal in the output waveguides 162a, 162b, 162c. Having equal intensities in the respective output signals may be an advantage in some measurement applications.

As mentioned in relation to Fig. 1, the electric field strength $E_{mod}$ of the modulated light signal may be expressed as the sum:

$$E_{mod} = E_0 \sum_{n=-\infty}^{\infty} A_n \, exp(i(\omega_0 + n\Omega)t)$$

Thus, all modulators 122a, 122b, 122c in the modulator array 120 may be driven to generate the same modulation signal, i.e., to have the same modulation period T. However, the PIC may be further configured to provide a delay between modulations of consecutive modulators 122a, 122b, 122c in the modulator array 120. A delay in modulation may give rise to a phase difference $\phi$ between modulations of consecutive modulators 122a, 122b, 122c in the modulator array 120, at the inputs 132a, 132b, 132c to the free propagation unit 130. In case the delay between modulations of consecutive modulators 122a, 122b, 122c is equal for all consecutive modulators 122a, 122b, 122c in the modulator array 120, the electric field strength $E_{mod}$ of the modulated light signal at the transmitting end 116a, 116b, 116c of each waveguide 112a, 112b, 112c may be expressed as:

Waveguide 112a: $\qquad E_a = E_0 \sum_{n=-\infty}^{\infty} A_n \, exp(i(\omega_0 + n\Omega)t + n \times 0 \times \phi)$

Waveguide 112b: $\qquad E_a = E_0 \sum_{n=-\infty}^{\infty} A_n \, exp(i(\omega_0 + n\Omega)t + n \times 1 \times \phi)$

Waveguide 112c: $\qquad E_a = E_0 \sum_{n=-\infty}^{\infty} A_n \, exp(i(\omega_0 + n\Omega)t + n \times 2 \times \phi)$

The delay determines the angle between the different orders n of the sideband frequencies. For each order n the waveguide array 110 will have a different phase shift $n \times \phi$ and thus the different order sidebands will diffract into different directions into the free propagation unit 130. This, in turn, affects the position at which the different sidebands reach the output side of the free propagation unit 130, and therefore also the positions at which the output waveguides 162a, 162b, 162c are arranged.

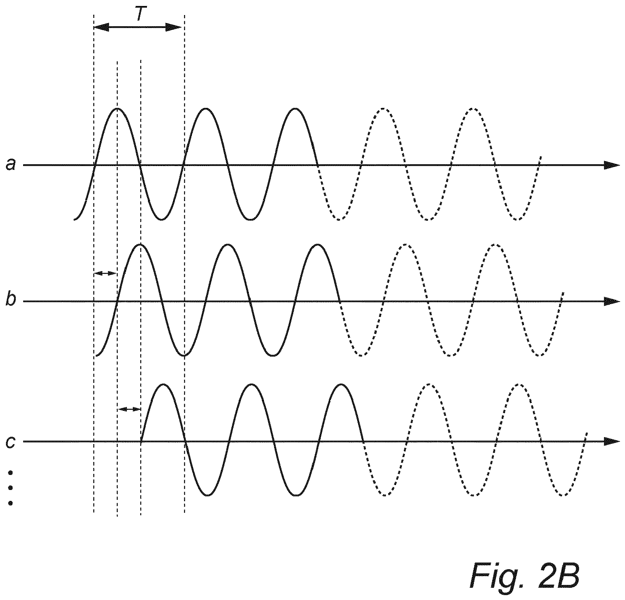

Fig. 2B illustrates the modulation signals modulating light signals in the waveguides 112a, 112b, 112c, when delayed modulation is applied. It should be understood that, although the modulation signals are illustrated here as sine waves, the modulation signals may alternatively comprise more complex waveforms.

As illustrated in Fig. 2B, the delay between the modulation signals of two consecutive modulators, modulating light signals in two consecutive waveguides, as for example a and b, may be within one modulation period T. The delayed modulation provides a phase difference between the two modulation signals. Since the delay and thus the phase difference determines the angle between the different orders n of the sideband frequencies, the angle may be tuned by tuning the modulation delay. Although the delay between the modulation signals of two consecutive waveguides is here illustrated as being within one modulation period T, it is conceivable that the delay may be longer, such as more than 5T, 10T, 20T, 30T, or 100T.

Further, as illustrated in Fig. 2B, the delay between modulations of consecutive modulators may be equal for all consecutive modulators in the modulator array. However, it is conceivable that different delays between different modulators may also be applied.

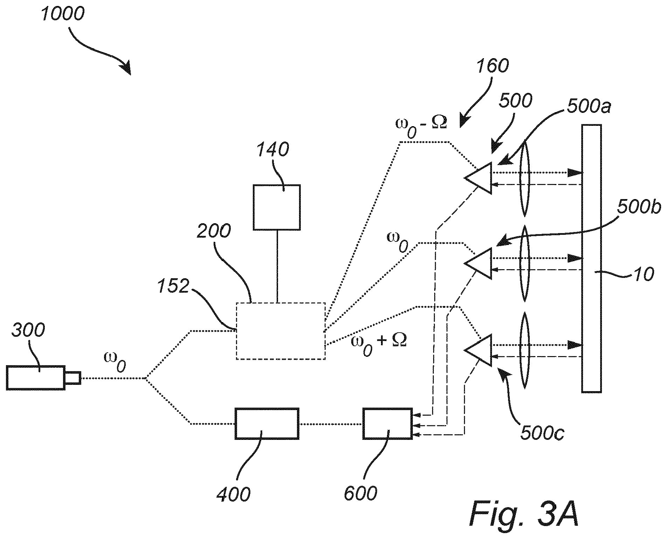

Fig. 3A schematically illustrates a system 1000 for multiple interferometric sensing. The system 1000 comprises a light source 300 in the form of a laser. The light source 300 generates an output laser beam of frequency $\omega_0$ which is split into two beams. Splitting may be provided by means of a splitter, a dichroic mirror, a prism, or the like.

The system 1000 further comprises a PIC 200, as described in relation to Fig. 2A. One of the two beams resulting from splitting the output laser beam forms the light beam for the PIC 200 and is guided to the splitter input 152 of the PIC 200. As previously described, the light beam is split by the splitter of the PIC 200 into light signals distributed through the waveguide array, in which the modulator array modulates the light signals, generating modulated light signals comprising a number of sideband frequencies including the fundamental frequency $\omega_0$. The light signals are modulated by a modulation signal having a modulation period T, and a modulation frequency $\Omega$, as previously defined. The modulated light signals propagate and interfere in the free propagation unit of the PIC 200 such that the sideband frequencies and the fundamental frequency are output through respective outputs of the free propagation unit, and guided by the respective output waveguides of the output waveguide array 160.

It should be realized that the number of output signals and thus the number of output waveguides may vary. For example, when describing the PIC 200 in relation to Fig. 2A, five output waveguides were described. However, in the system 1000 described in relation to Fig. 3A, the PIC 200 is described as having three output waveguides. The output signals of system 1000 have the frequencies $\omega_0 - \Omega$, $\omega_0$, and $\omega_0 + \Omega$, respectively. It should also be realized that, for simplicity and brevity, only a few output signals and frequencies are illustrated in the drawings, however, the actual number of output signals and frequencies may typically be much larger, at least in the range of 1 to 100, such as for example 10, 20, 30, 50, 100, or more.

As illustrated in Fig. 3A, the system 1000 may comprise a control unit 140 connected to the modulator array of the PIC 200, configured for controlling the generation of the modulation signal in each modulator.

The system 1000 may further comprise an array 500 of antennas 500a, 500b, 500c, associated with the array 160 of output waveguides. The output signals of the output waveguides may be coupled out of the PIC 200 by the respective antennas 500a, 500b, 500c. The output signals, each of which comprises a different frequency shift, may be guided towards a target 10, which may scatter the light in the respective output signals.

The other one of the two beams resulting from splitting the output laser beam is guided to a frequency shifter 400 configured to shift the frequency of the light passing therethrough. In the present embodiment, the frequency shifter is configured to shift the fundamental frequency $\omega_0$ to output light with a frequency of $\omega_0 - 1.5\Omega$. The shifted beam from the frequency shifter 400 forms a reference light beam of the system 1000. Thus, by splitting the output laser beam from the light source 300, the light source 300 may provide the reference light beam as well as the light beam for the PIC 200.

The system 1000 further comprises a photodetector 600. The photodetector 600 is configured to receive the output signals from the PIC 200 being scattered by a target 10, and to receive the reference light beam.

When the reference light beam is combined on a photodetector with a frequency shifted output signal scattered by the target, the photocurrent signal from the photodetector will be shifted in the electric frequency domain. The present arrangement allows for less photodetector noise.

Since the different output signals are frequency shifted to different frequencies with respect to the reference light beam and with respect to each other, the different output signals from the target may be combined with the reference light beam onto the single photodetector, and the output signals may subsequently be discerned in the electric spectrum from the photodetector. By the present arrangement, multiplexing of different output signals onto the single photodetector may be enabled. In the manner described above, phase information of the light may be measured. Measuring phase information of light may provide information about the optical path length that the light has travelled, which may be used for determining for instance distance and/or velocity. Given as a non-limiting example, the system may be a Laser Doppler Vibrometer (LDV) system.

The system 1000 is here described to comprise a PIC 200, as described in relation to Fig. 2A. However, it should be realized that the system 1000 is not limited to comprising the PIC 200. For example, if further beam splitting would be provided external to the PIC in the system 1000, the PIC may be the PIC 100, as described in relation to Fig. 1.

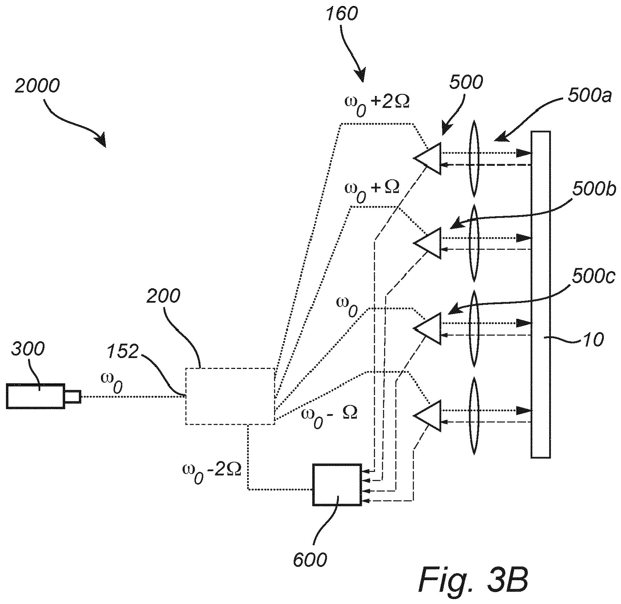

Fig. 3B schematically illustrates a system 2000 for multiple interferometric sensing. The system 2000 shares some of the features with the system 1000 described in relation to Fig. 3A, the details of which are not repeated here.

The system 2000 comprises a light source 300 in the form of a laser. The light source 300 generates an output laser beam of frequency $\omega_0$ which forms the light beam for the PIC 200 and is guided to the splitter input 152 of the PIC 200. Output signals being frequency shifted with respect to each other are generated and guided by the output waveguide array 160.

Contrary to the system 1000, the system 2000 does not comprise any separate frequency shifter for generating the frequency shift for the reference light beam. Instead, one of the output signals from the PIC 200 is used as the reference light beam. Thus, the output signal of one of the output waveguides in the output waveguide array 160 is not coupled out of the PIC 200 to be guided towards the target 10, but is rather guided directly towards the photodetector 600. The output signals of the rest of the output waveguides may be coupled out of the PIC 200 by the respective antennas 500a, 500b, 500c, and guided towards a target 10. The scattered light from the target 10 may subsequently be combined with the reference light beam onto the photodetector 600, thereby providing multiplexing of different output signals onto the single photodetector.

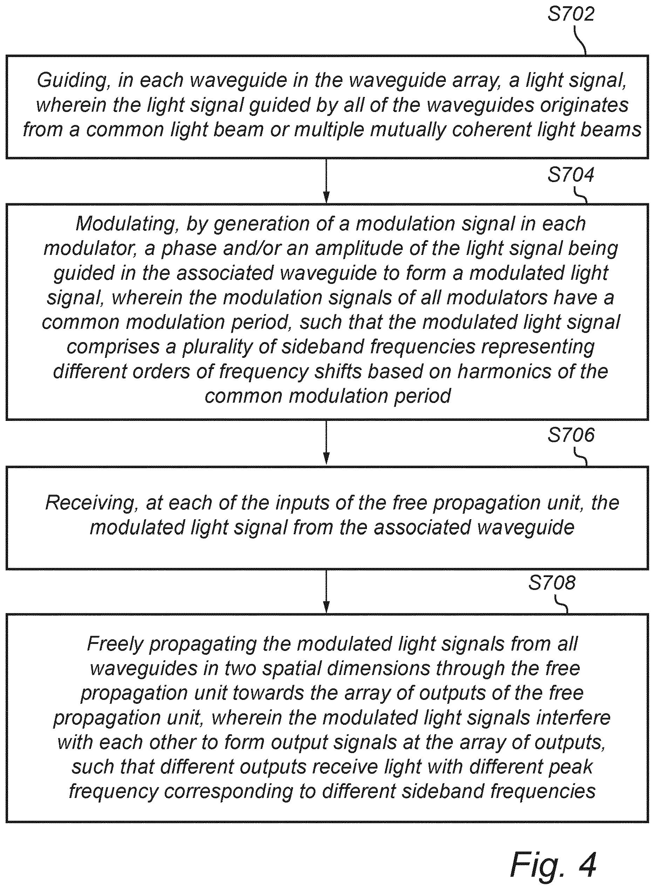

Fig. 4 illustrates a schematic block diagram shortly summarizing the method for frequency shifting of light in a photonic integrated circuit, PIC, comprising a waveguide array, a modulator array associated with the waveguide array such that each waveguide in the waveguide array is associated with a mutually unique modulator of the modulator array, and a free propagation unit comprising an array of inputs, each input being associated with a waveguide of the waveguide array. It should be understood that the steps of the method, although listed in a specific order herein, may be performed in any order suitable.

The method may comprise guiding S702, in each waveguide in the waveguide array, a light signal, wherein the light signal guided by all of the waveguides originates from a common light beam or multiple mutually coherent light beams.

The method may comprise modulating S704, by generation of a modulation signal in each modulator, a phase and/or an amplitude of the light signal being guided in the associated waveguide to form a modulated light signal, wherein the modulation signals of all modulators have a common modulation period, such that the modulated light signal comprises a plurality of sideband frequencies representing different orders of frequency shifts based on harmonics of the common modulation period.

The method may comprise receiving S706, at each of the inputs of the free propagation unit, the modulated light signal from the associated waveguide.

The method may comprise freely propagating S708 the modulated light signals from all waveguides in two spatial dimensions through the free propagation unit towards the array of outputs of the free propagation unit, wherein the modulated light signals interfere with each other to form output signals at the array of outputs, such that different outputs receive light with different peak frequency corresponding to different sideband frequencies.

If the PIC comprises an output waveguide array, each output waveguide of the output waveguide array being associated with an output of the free propagation unit, the method may further comprise receiving and guiding, by each output waveguide, the output signal.

The method may further comprise receiving, at a splitter, the common light beam, splitting, by the splitter, the common light beam so as to form a plurality of light signals, and guiding each of the light signals towards a mutually unique waveguide of the waveguide array.

The method may further comprise providing a delay between modulations of consecutive modulators in the modulator array.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

**1.** A photonic integrated circuit, PIC, the PIC comprising:

a waveguide array, wherein each waveguide in the waveguide array is configured to guide a light signal, wherein

EP 4 372 458 A1

the light signal guided by all of the waveguides originates from a common light beam or multiple mutually coherent light beams;

a modulator array associated with the waveguide array such that each waveguide in the waveguide array is associated with a mutually unique modulator of the modulator array, each modulator being configured to provide a modulation, by generation of a modulation signal, of a phase and/or an amplitude of the light signal being guided in the associated waveguide to form a modulated light signal, wherein the modulation signals of all modulators have a common modulation period, such that the modulated light signal comprises a plurality of sideband frequencies representing different orders of frequency shifts based on harmonics of the common modulation period;

a free propagation unit comprising an array of inputs, each input being associated with a waveguide of the waveguide array and configured to receive the modulated light signal from the associated waveguide, such that the modulated light signals from all waveguides propagate freely in two spatial dimensions through the free propagation unit towards an array of outputs of the free propagation unit, wherein the modulated light signals interfere with each other to form output signals at the array of outputs, such that different outputs receive light with different peak frequency corresponding to different sideband frequencies.

2. The PIC according to claim 1, further comprising an output waveguide array, wherein each output waveguide of the output waveguide array is associated with an output of the free propagation unit and configured to receive and guide a respective output signal of the output signals.

3. The PIC according to any one of claims 1 or 2, further comprising a splitter configured to receive the common light beam, to split the common light beam so as to form a plurality of light signals, and to guide each of the light signals towards a mutually unique waveguide of the waveguide array.

4. The PIC according to claim 3, wherein the splitter is further configured to split an intensity of the common light beam equally into the respective light signals.

5. The PIC according to any one of claims 3 or 4, wherein the splitter is further configured to split an intensity of the common light beam into the respective light signals such that intensities of the respective output signals are equal.

6. The PIC according to any of the preceding claims, further configured to provide a delay between modulations of consecutive modulators in the modulator array.

7. The PIC according to claim 6, wherein the delay between modulations of consecutive modulators is equal for all consecutive modulators in the modulator array.

8. The PIC according to any of the preceding claims, wherein the free propagation unit is in the form of a slab region.

9. The PIC according to any of the preceding claims, wherein the free propagation unit is in the form of a star coupler.

10. A system for multiple interferometric sensing, the system comprising:

a PIC according to any of the preceding claims;
a control unit connected to the modulator array and configured for controlling the generation of the modulation signal in each modulator.

11. The system according to claim 10, further comprising:

at least one light source configured and arranged to provide a reference light beam and the common light beam or the multiple mutually coherent light beams for the PIC;
at least one photodetector comprising a light sensitive element configured to generate an electrical signal dependent on an intensity of light incident onto the light sensitive element, the at least one photodetector being configured to receive the reference light beam and the output signals from the PIC being scattered by a target, incident onto the light sensitive element.

12. The system according to any one of claims 10 or 11, wherein the reference light beam is one of the output signals from the PIC.

13. A method for frequency shifting of light in a photonic integrated circuit, PIC, comprising a waveguide array, a modulator array associated with the waveguide array such that each waveguide in the waveguide array is associated with a mutually unique modulator of the modulator array, and a free propagation unit comprising an array of inputs, each input being associated with a waveguide of the waveguide array, the method comprising:

guiding, in each waveguide in the waveguide array, a light signal, wherein the light signal guided by all of the waveguides originates from a common light beam or multiple mutually coherent light beams;

modulating, by generation of a modulation signal in each modulator, a phase and/or an amplitude of the light signal being guided in the associated waveguide to form a modulated light signal, wherein the modulation signals of all modulators have a common modulation period, such that the modulated light signal comprises a plurality of sideband frequencies representing different orders of frequency shifts based on harmonics of the common modulation period;

receiving, at each of the inputs of the free propagation unit, the modulated light signal from the associated waveguide;

freely propagating the modulated light signals from all waveguides in two spatial dimensions through the free propagation unit towards the array of outputs of the free propagation unit, wherein the modulated light signals interfere with each other to form output signals at the array of outputs, such that different outputs receive light with different peak frequency corresponding to different sideband frequencies.

14. The method according to claim 13, wherein the PIC further comprises an output waveguide array, each output waveguide of the output waveguide array being associated with an output of the free propagation unit, the method further comprising:

receiving and guiding, by each output waveguide, a respective output signal of the output signals.

15. The method according to any one of claims 13 or 14, further comprising:

receiving, at a splitter, the common light beam;

splitting, by the splitter, the common light beam so as to form a plurality of light signals; and

guiding each of the light signals towards a mutually unique waveguide of the waveguide array.

Fig. 1

Fig. 2A

EP 4 372 458 A1

Fig. 2B

Fig. 3A

*Fig. 3B*

S702

Guiding, in each waveguide in the waveguide array, a light signal, wherein the light signal guided by all of the waveguides originates from a common light beam or multiple mutually coherent light beams

S704

Modulating, by generation of a modulation signal in each modulator, a phase and/or an amplitude of the light signal being guided in the associated waveguide to form a modulated light signal, wherein the modulation signals of all modulators have a common modulation period, such that the modulated light signal comprises a plurality of sideband frequencies representing different orders of frequency shifts based on harmonics of the common modulation period

S706

Receiving, at each of the inputs of the free propagation unit, the modulated light signal from the associated waveguide

S708

Freely propagating the modulated light signals from all waveguides in two spatial dimensions through the free propagation unit towards the array of outputs of the free propagation unit, wherein the modulated light signals interfere with each other to form output signals at the array of outputs, such that different outputs receive light with different peak frequency corresponding to different sideband frequencies

Fig. 4

Europäisches
Patentamt

European
Patent Office

Office européen
des brevets

## EUROPEAN SEARCH REPORT

Application Number

EP 22 20 8009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2006/093362 A1 (WELCH DAVID F [US] ET AL) 4 May 2006 (2006-05-04)<br>* abstract *<br>* figures 1a,2-11 *<br>* paragraphs [0059] - [0075] *<br>----- | 1,2,13, 14<br>3-12,15 | INV.<br>G02F1/03<br>G02B6/12<br>G02F1/225<br>H01S5/02 |
| A | HULME J C ET AL: "Fully integrated hybrid silicon free-space beam steering source with 32-channel phased array",<br>PROCEEDINGS OF SPIE, IEEE, US,<br>vol. 8989, 8 March 2014 (2014-03-08),<br>pages 898907-898907, XP060035951,<br>DOI: 10.1117/12.2044820<br>ISBN: 978-1-62841-730-2<br>* the whole document *<br>----- | 1-15 | |
| A | CHRISTOS TSOKOS ET AL: "Analysis of a Multibeam Optical Beamforming Network Based on Blass Matrix Architecture",<br>JOURNAL OF LIGHTWAVE TECHNOLOGY,<br>vol. 36, no. 16,<br>15 August 2018 (2018-08-15), pages 3354-3372, XP055639682,<br>USA<br>ISSN: 0733-8724, DOI: 10.1109/JLT.2018.2841861<br>* the whole document *<br>----- | 1-15 | TECHNICAL FIELDS SEARCHED (IPC)<br><br>G02B<br>H01S<br>G02F |
| A | FLAMAND G ET AL: "InP-based PIC for an optical phased-array antenna at 1.06 m",<br>IEEE PHOTONICS TECHNOLOGY LETTERS, IEEE, USA,<br>vol. 12, no. 7, 1 July 2000 (2000-07-01),<br>pages 876-878, XP011431991,<br>ISSN: 1041-1135, DOI: 10.1109/68.853532<br>* the whole document *<br>----- | 1-15 | |

-/--

The present search report has been drawn up for all claims

| Place of search | Date of completion of the search | Examiner |
|---|---|---|
| The Hague | 21 April 2023 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 22 20 8009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MADRID D ET AL: "A novel 2N beams heterodyne optical beamforming architecture based on N/spl times/N optical Butler matrices", 2002 IEEE MTT-S INTERNATIONAL MICROWAVE SYMPOSIUM DIGEST (CAT. NO.02CH37278) IEEE PISCATAWAY, NJ, USA; [IEEE MTT-S INTERNATIONAL MICROWAVE SYMPOSIUM], IEEE, 2 June 2002 (2002-06-02), page 1945, XP032408639, DOI: 10.1109/MWSYM.2002.1012245 ISBN: 978-0-7803-7239-9 * the whole document * | 1-15 | |

TECHNICAL FIELDS
SEARCHED      (IPC)

The present search report has been drawn up for all claims

| Place of search | Date of completion of the search | Examiner |
|---|---|---|
| The Hague | 21 April 2023 | Beugin, Anne |

EPO FORM 1503 03.82 (P04C01)

page 2 of 2

## ANNEX TO THE EUROPEAN SEARCH REPORT
## ON EUROPEAN PATENT APPLICATION NO.

EP 22 20 8009

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2023

| Patent document cited in search report | Publication date | Patent family member(s) | Publication date |
|---|---|---|---|
| US 2006093362    A1 | 04-05-2006 | US    2006093362 A1 | 04-05-2006 |
| | | US    2007127864 A1 | 07-06-2007 |
| | | US    2007201785 A1 | 30-08-2007 |
| | | US    2009022495 A1 | 22-01-2009 |

EPO FORM P0459

For more details about this annex : see Official Journal of the European Patent Office, No. 12/82